# EUROPÄISCHE PATENTSCHRIFT

(11) **EP 1 944 119 B1**
(45) Veröffentlichungstag und Bekanntmachung des Hinweises auf die Patenterteilung: **19.05.2010**
(21) Anmeldenummer: 07022804.4
(22) Anmeldetag: 24.11.2007
(51) Int. Cl.: B23K 31/12, B23K 26/03, B23K 11/25, G01N 25/72

(54) **Vorrichtung zur Bewertung der Qualität von Schweissnähten durch Erfassung des Temperaturprofils der sich abkühlenden Schmelze während des Schweissens**
Device for evaluating the quality of weld seams by recording the temperature profile of the cooling molten mass during welding
Dispositif d'évaluation de la qualité de fils de soudure par enregistrement du profil de température de la masse fondue refroidissant pendant la soudure

(30) Priorität: 15.01.2007 DE 102007002110
(43) Veröffentlichungstag der Anmeldung: 16.07.2008
(73) Patentinhaber: HKS-Prozesstechnik GmbH, 06120 Halle / Saale (DE)
(72) Erfinder: Schauder, Volker, Dr.-Ing., 06258 Schkopau (DE); Häussler, Matthias, 06118 Halle/Saale (DE); Kiese, Michael, 06120 Halle/Saale (DE); Hollmann, Olaf, 06120 Halle/Saale (DE)
(74) Vertreter: Gulde Hengelhaupt Ziebig & Schneider

(56) Entgegenhaltungen:
- EP-A- 0 261 657
- BE-A6- 1 005 941
- GB-A- 2 073 443

## Beschreibung

Die Erfindung betrifft eine Vorrichtung zur Bewertung der Qualität von Schweißnähten durch Erfassung des Temperaturprofils der sich abkühlenden Schmelze während des Schweißens.

An automatisierte Schweißnahtüberwachungen wird die Aufgabe gestellt, das Ergebnis einer Schweißung nach Möglichkeit besser, schneller und mit der gleichen Sicherheit wie der Mensch vorzunehmen.
Es ist Stand der Technik, dazu Überwachungseinrichtungen auf Basis der Messung eines elektrischen Parameters des Lichtbogenschweißprozesses einzusetzen. Diese Verfahren haben den großen Vorteil, dass nur wenige Anbauten zur Erfassung und Bewertung des Schweißprozesses notwendig sind und die Bewertung unmittelbar nach Schweißende vorliegt. Damit entstehen nur relativ geringe Kosten und das Ergebnis ist sofort verfügbar. Allerdings gibt es erhebliche Einschränkungen in der Erkennung von Schweißunregelmäßigkeiten, die nicht auf einer Fehlfunktion der Schweißgerätetechnik (Probleme der Schweißdrahtförderung etc.) zurückzuführen sind. Kritisch sind insbesondere Einbrand- und Bindefehler. Diese beruhen darauf, dass z.B. die Schweißung selber gut funktioniert, aber entweder durch einen veränderten Spalt zu fügender Werkstücke oder aber deren Toleranzen eine Bindung der beiden Grundwerkstoffe gar nicht oder nur sehr stark vermindert erfolgt.

Um diese Probleme zu finden, wird immer mehr eine optische Vermessung der Schweißnaht im erkalteten Zustand vorgenommen.
Oberflächenscanner vermessen das Profil der Schweißnaht und vergleichen die Ergebnisse mit Sollwerten. Damit können visuell nachvollziehbare Schweißunregelmäßigkeiten gefunden werden, allerdings bestehen Grenzen bei der Erkennung kleiner Unregelmäßigkeiten, wie z. B. Poren, auch sind Schlackereste oder Silikate von der eigentlichen Schweißnaht nicht zu unterscheiden. Binde- und Einbrandfehler sind aber auch nur dann zu erkennen, wenn sie oberflächliche Auswirkungen haben, welches bei Flankenbindefehlem nur selten der Fall ist. Ein Hauptproblem beim Einsatz dieser optischen Vermessung der Schweißnaht sind die erheblichen Kosten und Zeitverluste. Die Vermessung erfolgt dadurch, dass ein optischer Kopf nochmals über die Schweißnaht geführt wird, wozu eine weitere Führungsmaschine (Roboter) benötigt wird, und wodurch ein quasi neuer Fertigungsschritt mit Verzögerung entsteht.
Seit langem anerkannt ist die Thermografie als zerstörungsfreies Prüfverfahren, besonders in der Anwendung zur Prüfung von Schweißnähten. Als aktive Thermografie bezeichnet man dabei Verfahren, bei denen der Prüfling erhitzt wird und die gestörte, ungleichmäßige Wärmeleitfähigkeit auf Lunker, Poren, Risse oder fehlerhafte Verbindungen Rückschlüsse erlaubt. Diese Prüfverfahren nutzen zwar die Wärmeleitfähigkeit, finden aber immer nach dem Schweißprozess statt.
Der Einsatz von Wärmebildkameras beim Schweißen ist besonders aus Entwicklungslaboren bekannt. Dabei werden z. B. Modelle der Wärmeausbringung mit realen Werten verglichen, um aussagefähige Berechnungsalgorithmen für die Modellbildung zu erhalten.

Nachfolgend zitierte Patentschriften sollen beispielhaft den gefundenen Stand der Technik näher darstellen.

Dokument BE-A-1005941 offenbart eine Vorrichtung zur Bewertung der Qualität von Schweissnähten mittels Infrarotempfängen.

Nach DD 15 73 98 wird ein Verfahren zum Auswerten der von der Schneidkante oder Schweißnaht emittierten Wärmestrahlung vorgeschlagen.
Hier wird die emittierte Wärmestrahlung mittels einer Thermovisionsanlage aufgenommen und mittels einer nachgeschalteten Auswerteeinrichtung analysiert, wobei die gewonnenen Signale zur Steuerung und Regelung des Prozesses verwendet werden. Durch entsprechende Stelleinheiten am Steuergerät werden den Farbsignalen bestimmte Temperaturbereiche zugeordnet und durch Soll-Ist-Vergleiche mit vorgegebenen Werten Abweichungen festgestellt. Ein Nachregeln der Schweißparameter soll dabei mögliche Unregelmäßigkeiten der Schweißverbindung vermeiden. Abgesehen davon dass ein anderes Ziel damit verfolgt wurde, ist hier nachteilig, dass die Aufnahmetechnik nicht nahe genug am Schweißbrenner positioniert werden kann und ein sehr erheblicher gerätetechnischer Aufwand getrieben werden muss. Diese Technik ist somit nicht geeignet an einer Roboterzelle in der Serienfertigung eingesetzt zu werden.

In DE 10 2004 028 607 A1 wird eine Vorrichtung und ein Verfahren zur zerstörungsfreien Prüfung der Verbindungsqualität von Bolzenschweißverbindungen vorgestellt. Auch hier findet die Untersuchung der Schweißverbindung erst im Anschluss an den beendeten Fügeprozess statt. Auch hier spricht man vom Einsatz einer IR-Kamera, ohne die damit verbunden Probleme der Verschmutzung und Robustheit, der Anschaffungskosten und der Baugrößen zu beachten.
Die möglichst gleichmäßige Erwärmung der Werkstücke vor Aufnahme eines Wärmebildes mit einer IR-Kamera ist hier das wesentliche erfinderische Element, wobei mittels der Vorrichtung das Prüfverfahren automatisiert und Energie eingespart werden soll.

Mit DE 199 35 777 B4 ist eine Vorrichtung zum Beurteilen der Schweißgüte genannt. Sie wird insbesondere zur Prüfung von Abbrennstumpfschweißverbindungen nach erfolgter Schweißung angewendet. Die gefügten Werkstücke bleiben in Schweißposition eingespannt und es wird während des Entgratens der Schweißnaht über ihre Länge ein Wärmestrahlungspyrometer bzw. eine thermografische Einrichtung als weitere Variante mitgeführt, sodass eine Temperaturkurve erzeugbar ist bzw. Glanz und Farbe der Schweißnaht erfasst werden, woraus auf ggf. vorliegende Schweißnahtunregelmäßigkeiten geschlossen wird. Sofortige Nachschweißungen werden im gesetzten Fall durchgeführt. Allerdings erfolgt auch hier die Anwendung nach dem Schweißprozess im Sinne eines Prüfschritts, so dass diese Einlassungen dem erfinderischen Ziel nicht entsprechen.

Die DE 692 07 476 T2 bietet ein Verfahren zur Überwachung einer Stumpfnaht zwischen Metallbändern an. Die Überwachung erfolgt thermografisch im Warmzustand, z. B. gefügter Blechbänder, die nachfolgenden mechanischen Bearbeitungen unterzogen werden sollen.
Die erstellbare "thermische Karte" liegt nach Ausführung der Naht vor. Für die Schweißnaht werden festgelegte Bereiche für die Erstellung von Temperaturprofilen quer zur Naht und ein Temperaturprofil über die gesamte Länge der Naht erstellt. Maß der Qualitätsprüfung sind einzuhaltende Temperatur-Minima und -Maxima. Da bei Messung der Temperatur der Schweißprozess beendet ist bzw. in einer weiteren Ausführung nach dem Richten vor dem Schweißen gemessen (thermografisch) wird, können relativ kurze Messabstände realisiert werden.
Der Einsatz von Thermografiegeräten, insbesondere mit optischen Systemen, ist jedoch beim offenen Lichtbogenschweißen, nahe der sich abkühlenden Schmelze, eben während des Schweißprozesses, z. B. wegen rauer Umgebungsbedingungen, nicht zu empfehlen.

Zusammenfassend kann gesagt werden, dass auch eine Reihe von Untersuchungen und Anwendungen bekannt sind, mittels derer sichtbare und unsichtbare Bindefehler, als auch Löcher oder Risse über eine inhomogene Wärmeausbreitung feststellbar sind. Der Gedanke, die Temperatur des abkühlenden Schmelzbades zu nutzen, war immer mal wieder Gegenstand wissenschaftlicher Forschungen, scheiterte aber in der Praxis beim Lichtbogenschweißen an folgenden Faktoren:
- Die Temperaturen können nur berührungslos über pyrometrische Messverfahren erfasst werden.
- Der Lichtbogen stellt eine Lichtquelle dar, der alle Frequenzbereiche überstreicht und damit die Wärmestrahlung des Schmelzbades überstrahlt.
- Die Umgebungsbedingungen sind durch Metalldampf und Spritzer äußerst feindlich für optische Systeme.
- Die Baugröße und die Zugängigkeit am Schweißbrenner müssen erhalten bleiben.

Mit dem eingangs beschriebenen Stand der Technik können Probleme der zeitnahen Erfassung, Auswertung auf im Schweißbad enthaltene Unregelmäßigkeiten nicht gelöst werden.

Es ist daher Aufgabe der Erfindung, eine Vorrichtung zu entwickeln, die es ermöglichen soll, basierend auf aus der Thermografie bekannten Wirkungsweisen die Oberflächentemperaturen der sich abkühlenden Schmelze und der beteiligten Grundwerkstoffe in unmittelbarer Nähe des Schweißlichtbogens zu erfassen und basierend darauf Schweißunregelmäßigkeiten, wie Flankenbindefehler, Bindefehler, Einbrandfehler als auch andere Schweißunregelmäßigkeiten zu erkennen und automatisch auszuwerten.
Dabei soll die Vorrichtung erfindungsgemäß so ausgelegt werden, dass sie in Größe und Gewicht an einem herkömmlichen Schweißbrenner befestigt werden kann und in unmittelbarer Nähe zum Lichtbogenschweißprozess unter den Bedingungen von Schweißrauchen, Schweißspritzern und hoher Umgebungstemperatur berührungslos das Temperaturprofil quer zur Schweißnaht weitgehend ungestört von der Wärmestrahlung eines Lichtbogens erfasst.

Erfindungsgemäß wird die Aufgabe durch die in den kennzeichnenden Merkmalen des Patentanspruches 1 gelöst. Die weitere Ausgestaltung der Erfindung ergibt sich aus den Patentsprüchen 2 bis 6.

Folgende ergänzende Hinweise zur erfindungsgemäßen Lehre sind erforderlich.

Die Wärmestrahlung der sich abkühlenden Schmelze und deren Randzonen wird durch einen erfindungsgemäßen etwa quaderförmigen Erfassungskopf als Linie quer zur Schweißnaht erfasst. Dieser Erfassungskopf steht konstruktiv mit dem Schweißbrenner in Verbindung, so dass die Temperaturerfassungslinie des Erfassungskopfes mit der Geschwindigkeit des Schweißbrenners über die sich abkühlende Schweißnaht geführt wird. Dieser Erfassungskopf ist damit sehr dicht am Lichtbogen und damit den Schweißrauchen, der hohen Temperatur, der erheblichen Lichtbogenstrahlung und den Schweißspritzem ausgesetzt. Erfindungsgemäß kommt innerhalb des Erfassungskopfes ein glasloser Kollimator in Form eines Blockes zum Einsatz, der tiefe dünne Löcher enthält, die meist in einer Reihe angeordnet sind und an dessen Ende sich jeweils ein Strahlungsempfänger befindet und somit eine Erfassungszeile gebildet wird. Durch die tiefen Löcher im Kollimator werden nur die Strahlungsanteile hindurchgelassen, die parallel zu den Löchern einfallen, alle anderen Strahlungsanteile werden von der Innenwand der Löcher absorbiert, da diese dort eine absorbierende Beschichtung aufweisen. Der Kollimator ist, wie eingangs erwähnt, auf die abkühlende Schmelze quer ausgerichtet, wodurch die Lichtbogenstrahlung und andere Wärmestrahlung gezielt ausgeschlossen werden. Mit der Tiefe und dem Durchmesser der Löcher im Kollimator lassen sich die optische Abbildung und die Größe des erfassten Bereiches beeinflussen, wobei die realistischen, konstruktiven Möglichkeiten der Größe der Empfänger zu berücksichtigen ist. Durch einen kontinuierlichen Gasstrom durch die Löcher wird erfindungsgemäß verhindert, dass Ablagerungen und Verdreckungen eindringen können, als auch dass dadurch eine Kühlung der Innenwände von den absorbierten Strahlungsanteilen vorgenommen wird.
Die Strahlungsempfänger erfassen nur den Anteil von Infrarotstrahlung, der Rückschlüsse auf die Temperatur erlaubt, dass kann mittels bekannter Strahlungsempfänger selber oder durch einen unmittelbar aufgesetzten optischen Filter erfolgen. Diese sind wiederum jeweils mit einer Auswerteelektronik verbunden, wobei eine Verstärkung, Digitalisierung und Linearisierung eines jeden proportionalen Signals mittels bekannter elektrischer Elemente durchgeführt wird. Diese Erfassung kann sowohl zyklisch als auch kontinuierlich erfolgen.
Erfindungsgemäß kann zur Verfeinerung der Messwertaufnahmen und zur Erstellung aussagefähiger Wärmeprofile vorgesehen werden, dass der vom Schmelzbad und dem Lichtbogen ausgehenden Strahlung die Anteile sichtbaren und infraroten Lichts separat entnommen werden und einem jeweiligen Empfänger zugeleitet, elektronisch gewandelt und als Differenz ausgewertet werden.
Da das Wärmefeld keine Anteile von sichtbarem Licht enthält, aber das Lichtbogenlicht proportionale Anteile sichtbarer und Infrarotstrahlung besitzt, kann durch diese Differenzbildung eine nahezu vollständige Kompensation von eingestreutem Lichtbogenanteil erfolgen.
Erfindungsgemäß kann die Strahlung über Lichtleiter vom Erfassungskopf zur Auswerteelektronik geführt werden, wobei ein noch kompakterer Aufbau dadurch möglich ist.
Erfindungsgemäß werden die Aufnahmen einer solchen Strahlungszeile zu Kennwerten und zweidimensionalen Wärmebildern in einem Auswerterechner weiterverarbeitet, dargestellt und gespeichert. Die automatische Erkennung von Schweißunregelmäßigkeiten wird dadurch gelöst, dass die Aufnahmen unter Verwendung bekannter Zeilen- und Bildverarbeitungsalgorithmen online im Auswerterechner analysiert werden, wobei dabei auch als Vergleich bereits gespeicherte fehlerfreie Schweißnähte zum Einsatz kommen können.

Flankenbindefehler, bei denen die Anbindung an den Grundwerkstoff nicht ausreichend gegeben ist, sind dabei z.B. durch erhöhte Temperaturen an dieser Stelle gekennzeichnet, die im Vergleich mit fehlerfreien Aufnahmen deutlich erkennbar sind.

Die Erfindung soll nunmehr anhand von Ausführungsbeispielen der zur Ausführung erforderlichen Vorrichtung näher erläutert werden.

Dabei zeigen die einzelnen Figuren.

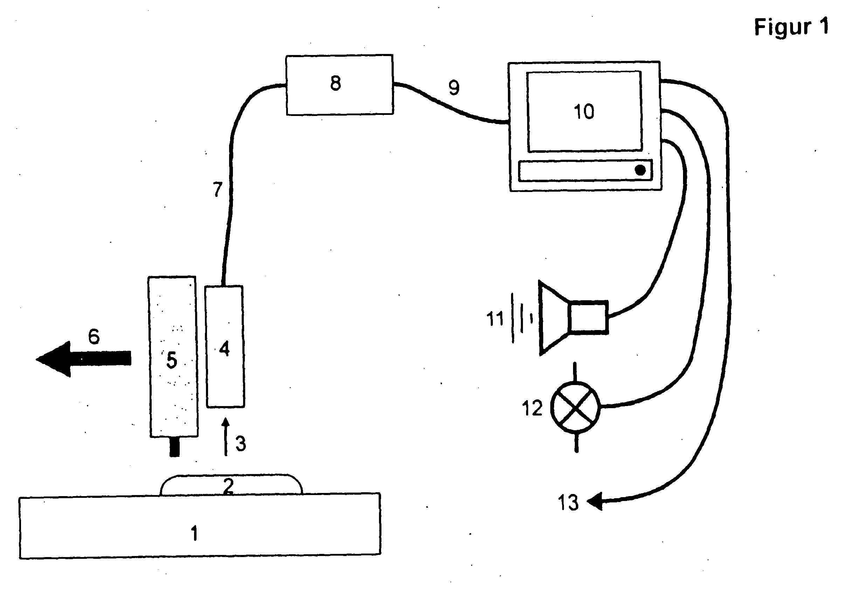

- Figur 1:: Schematische Darstellung zur Anordnung des Erfassungskopfes an einen Schweißbrenner und seine Verbindung zu einer Elektronikeinheit

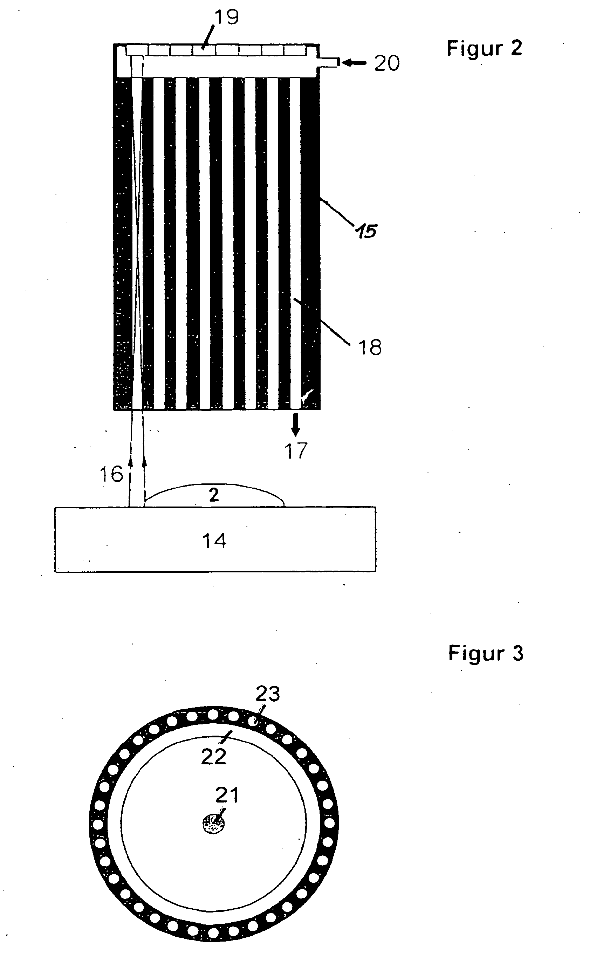

- Figur 2:: Prinzipieller Aufbau des Erfassungskopfes als Seitenansicht im Schnitt
- Figur 3:: Erfassungskopf in Orbitalausführung als Draufsicht von unten

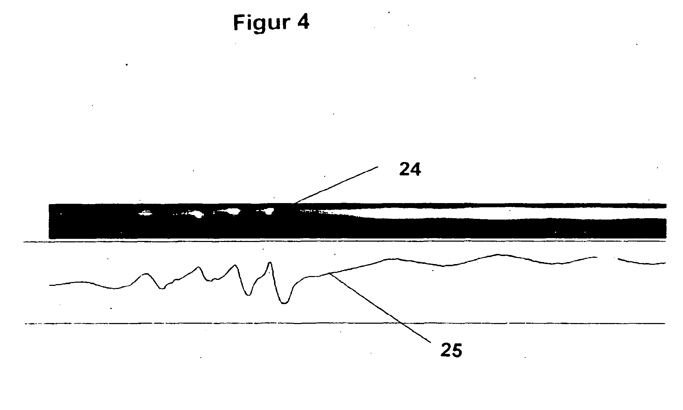

- Figur 4:: Wärmefeld einer Längsnaht mit Störung

Die verwendeten Bezugszeichen bedeuten:
1 - Grundwerkstoff
2 - Schweißnaht
3 - Wärmestrahlung
4 - Erfassungskopf
5 - Schweißbrenner
6 - Verfahrrichtung
7 - Verbindungskabel
8 - Elektronikeinheit
9 - Digitale Verbindungsleitung
10 - Auswerterechner
11 - akustische Signalisiereinheit
12 - optische Signalisierung
13 - Anschluss an übergeordnete Steuerung
14 - Grundwerkstoff
15 - Lochkollimator
16 - Strahlung
17 - Ausströmen des Spülgases
18 - Röhrchen
19 - Infrarotempfänger
20 - Spülgaszuführung
21 - Schweißdraht
22 - Gasdüse
23 - Orbitalkollimator
24 - Wärmebild einer Schweißnaht
25 - berechnete Größe Wärmeintegral des Wärmebildes

Die Vorrichtung besteht aus einem Erfassungskopf 4 , in welchem sich ein Lochkollimator 15 befindet und, wobei hinter der Vorrichtung Infrarotempfänger 19 mit Wirkverbindung zur Elektronikeinheit 8 jeweils über einem Loch angeordnet sind. Der Lochkollimator 15 enthält die in Reihe angeordneten Löcher kleinen Durchmessers. Jedes einzelne sich daran anschließende Röhrchen 18 des Lochkollimators 15 ist innen mit einer Antireflexbeschichtung versehen. So werden nur Strahlungsanteile parallel zur Ausrichtung des jeweiligen Röhrchens 18 erfasst, welches - wie erwähnt - senkrecht über einer Schmelze im Erfassungskopf 4 angeordnet ist. Allen Röhrchen 18 ist eine kontinuierlich wirkende Spülgaszuführung 20, die mit definiertem Gasdruck arbeitet zugeordnet, so dass die Strömungsgeschwindgkeit in den Löchern 17 das Eindringen von Spritzern und Schweißrauchen sicher verhindert.
Der wie v.g. jeweilige Infrarotempfänger 19 ist über ein Verbindungskabel 7 mit der Elektronikeinheit 8 verbunden, die aus einem digitalen Signalprozessor besteht und die empfangenen elektrischen Signale der Infrarotempfänger 19 verstärkt, digitalisiert und linearisiert. Sie werden an den Auswerterechner 10 über eine digitale Verbindungsleitungeitung 9 gegeben. Die Darstellung eines zyklisch oder kontinuierlich erstellbaren Wärmeprofils erfolgt im Auswerterechner 10.

Alle Schweißunregelmäßigkeiten führen zu Veränderungen im Wärmebild einer Schweißnaht 24. Erfindungsgemäß wird deshalb ein Vergleich von vorher eingelernten Wärmebildern bzw. dessen Kennwerten, die als berechnete Größe einesWärmeintegrals des Warmebildes 25 vorliegen, von fehlerfreien Schweißnähten mit den aktuellen Schweißnähten durchgeführt. Dabei kommen auch Algorithmen zum Einsatz, die nicht nur die Abweichung erkennen, sondern auch die Art der Schweißunregelmäßigkeit, wie z.B. Durchbrand, Einbrandfehler, Flankenbindefehler.

Die o.g. Kennwerte können sein:
- Integral der Wärmeeinbringung oberhalb einer bestimmten Temperatur
- Position des Wärmeschwerpunktes
- Maximalwert der Temperatur in der Zeile
- Symmetrie des Temperaturprofiles in der Zeile

Damit ergeben sich zweckmäßigerweise wenige derselben, die ein Temperaturprofil kennzeichnen. Bei einfachen Anwendungen mit langen kontinuierlichen Wärmefeldern wie in der Rohrproduktion können diese Kennwerte mit ermittelten festen Vorgabewerten verglichen werden. Beim Roboterschweißen mit stark bauteilabhängigen Wärmefeldern, werden diese pro Schweißnaht vorher aufgenommen und dann verglichen.
Die richtungsabhängige Anbringung einer solchen Vorrichtung kann dadurch aufgehoben werden, indem der Lochkollimator 15 als Orbitalkollimator 23 ausgeführt wird, wobei nur die Elemente ausgewertet werden, die Infrarotstrahlung empfangen.

## Patentansprüche

1. Vorrichtung zur Bewertung der Qualität von Schweißnähten (2) durch Erfassung des Temperaturprofils der sich abkühlenden Schmelze während des Schweißens, **dadurch gekennzeichet, dass** ein Erfassungskopf (4) an einem Schweißbrenner (5) in unmittelbarer Nähe seiner Düse derart fest ist, anbringbar dass die Ausrichtung eines in ihm befindlichen Lochkollimators (15) quer zur Schweißnaht (2) ist und eine definierte Anzahl von Löchern mit sich daran anschließenden Röhrchen (18) des Lochkollimators (15) senkrecht über die sich abkühlende Schmelze der Schweißnaht (2) positioniert und zu jedem Röhrchen (18) des Lochkollimators (15) ein Infrarotempfänger (19) zugeordnet ist, wobei alle Infrarotempfänger (19) mit einer Elektronikeinheit (8) in Wirkverbindung stehen und die Elektronikeinheit (8) ihrerseits mit einem Auswerterechner (10) korrespondiert.

2. Vorrichtung zur Bewertung der Qualität von Schweißnähten durch Erfassung des Temperaturprofils der sich abkühlenden Schmelze während des Schweißens nach Anspruch 1, **gekennzeichnet dadurch, dass** die Röhrchen (18) des Lochkollimators (15) in einer Reihe sowie dabei zueinander parallel und senkrecht angeordnet sind und eine solche Anzahl aufweisen, dass neben der Schweißnaht (2) auch die Flanken eines Grundwerkstoffs (1,14) erfasst sind.

3. Vorrichtung zur Bewertung der Qualität von Schweißnähten durch Erfassung des Temperaturprofils der sich abkühlenden Schmelze während des Schweißens nach Anspruch 1, **gekennzeichnet dadurch, dass** der Lochkollimator (15) in einer weiteren Ausführung eine kreisförmige Ausbildung besitzt, die um den Schweißbrenner (5) orbital angeordnet ist.

4. Vorrichtung zur Bewertung der Qualität von Schweißnähten durch Erfassung des Temperaturprofils der sich abkühlenden Schmelze während des Schweißens nach Anspruch 1, **gekennzeichnet dadurch, dass** die Röhrchen (18) an ihren Innenwänden mit einer absorbierenden Antireflexbeschichtung versehen sind.

5. Vorrichtung zur Bewertung der Qualität von Schweißnähten durch Erfassung des Temperaturprofils der sich abkühlenden Schmelze während des Schweißens nach Anspruch 1, **gekennzeichnet dadurch, dass** die Infrarotempfänger (19) in der Elektronikeinheit (8) untergebracht sind und die Strahlung mittels Verbindungskabel (7), welches ein Lichtleitkabel ist, vom Erfassungskopf (4) zum Auswerterechner (10) führbar ist.

6. Vorrichtung zur Bewertung der Qualität von Schweißnähten durch Erfassung des Temperaturprofils der sich abkühlenden Schmelze während des Schweißens nach Anspruch 1, **gekennzeichnet dadurch, dass** die Strahlung (16) zu zwei Empfängern (19) führbar ist, wobei der eine den sichtbaren Anteil und der andere den Infrarotanteil empfängt und mittels Differenzbildung dieser beiden Signale die Wärmestrahlung des Lichtbogens eliminierbar ist.

## Claims

1. A device for evaluating the quality of weld seams (2) by recording the temperature profile of the cooling molten mass during welding, **characterized in that** a recording head (4) can be securely attached to a welding torch (5), directly next to the nozzle thereof, in such a manner that a hole collimator (15) which is located in said recording head is aligned transverse to the weld seam (2), and a defined number of holes with adjoining tubes (18) of the hole collimator (15) are positioned vertically above the cooling molten mass of the weld seam (2), and an infrared receiver (19) is assigned to each tube (18) of the hole collimator (15), wherein all infrared receivers (19) are effectively connected to an electronic unit (8), which electronic unit (8) in turn communicates with an evaluation computer (10).

2. A device for evaluating the quality of weld seams by recording the temperature profile of the cooling molten mass during welding according to claim 1, **characterized in that** the tubes (18) of the hole collimator (15) are arranged in a row and are parallel to each other and extend vertically, and their number is such that in addition to the weld seam (2), the sides of a base material (1, 14) are also recorded.

3. A device for evaluating the quality of weld seams by recording the temperature profile of the cooling molten mass during welding according to claim 1, **characterized in that** the hole collimator (15) has a circular design in another embodiment and is arranged around the welding torch (5) in an orbital manner.

4. A device for evaluating the quality of weld seams by recording the temperature profile of the cooling molten mass during welding according to claim 1, **characterized in that** the tubes (18) are provided with an absorbing antireflection coating on their inner walls.

5. A device for evaluating the quality of weld seams by recording the temperature profile of the cooling molten mass during welding according to claim 1, **characterized in that** the infrared receivers are housed in the electronic unit (8), and radiation can be passed from the recording head (4) to the evaluation computer (10) by means of a connection cable (7) which is an optical fibre cable.

6. A device for evaluating the quality of weld seams by recording the temperature profile of the cooling molten mass during welding according to claim 1, **characterized in that** radiation (16) can be passed to two receivers (19), one of which receives the visible portion and the other one of which receives the infrared portion, and the thermal radiation of the electric arc can be eliminated by calculating the difference between the two signals.

## Revendications

1. Dispositif d'évaluation de la qualité de fils de soudure (2) par enregistrement du profil de température de la masse fondue refroidissant pendant la soudure, **caractérisé en ce qu'**une tête d'enregistrement (4) peut être placée de façon fixe sur un chalumeau de soudage (5) à proximité immédiate de sa buse de sorte qu'un collimateur à trous (15) qui s'y trouve est aligné transversalement au cordon de soudure (2) et qu'un nombre défini de trous, avec des petits tubes (18) du collimateur à trous (15) qui s'y raccordent, sont positionnés au-dessus de la masse fondue qui refroidit du cordon de soudure (2) et que, à chaque petit tube (18) du collimateur à trous (15), est affecté un récepteur infrarouge (19), tous les récepteurs infrarouges (19) étant en liaison opératoire avec une unité électronique (8), et l'unité électronique (8) correspondant de son côté à un calculateur d'analyse (10).

2. Dispositif d'évaluation de la qualité de fils de soudure par enregistrement du profil de température de la masse fondue refroidissant pendant la soudure selon la revendication 1, **caractérisé en ce que** les petits tubes (18) du collimateur à trous (15) sont disposés sur une rangée ainsi que parallèlement et perpendiculairement les uns par rapport aux autres, et présentent un nombre tel que, outre le cordon de soudure (2), les flancs d'un matériau de base (1, 14) sont également enregistrés.

3. Dispositif d'évaluation de la qualité de fils de soudure par enregistrement du profil de température de la masse fondue refroidissant pendant la soudure selon la revendication 1, **caractérisé en ce que** le collimateur à trous (15) possède, dans une autre réalisation, une formation circulaire qui est disposée de façon orbitale autour du chalumeau de soudage (5).

4. Dispositif d'évaluation de la qualité de fils de soudure par enregistrement du profil de température de la masse fondue refroidissant pendant la soudure selon la revendication 1, **caractérisé en ce que** les petits tubes (18) sont munis, sur leurs parois intérieures, d'un revêtement absorbant antireflet.

5. Dispositif d'évaluation de la qualité de fils de soudure par enregistrement du profil de température de la masse fondue refroidissant pendant la soudure selon la revendication 1, **caractérisé en ce que** les récepteurs infrarouges (19) sont logés dans l'unité électronique (8), et **en ce que** le rayonnement peut être conduit depuis la tête d'enregistrement (4) vers le calculateur d'analyse (10) au moyen d'un câble de liaison (7) qui est un câble de conduction de lumière.

6. Dispositif d'évaluation de la qualité de fils de soudure par enregistrement du profil de température de la masse fondue refroidissant pendant la soudure selon la revendication 1, **caractérisé en ce que** le rayonnement (16) peut être conduit à deux récepteurs (19), l'un deux recevant la portion visible et l'autre la portion infrarouge, et le rayonnement thermique de l'arc électrique pouvant être éliminé par la soustraction de ces deux signaux.
